# EUROPÄISCHE PATENTANMELDUNG

(11) **EP 2 602 676 A1**
(43) Veröffentlichungstag der Anmeldung: **12.06.2013**
(21) Anmeldenummer: 11192506.1
(22) Anmeldetag: 08.12.2011
(51) Int. Cl.: G05B 13/04

(54) **Bestimmen von reibungskomponenten eines antriebssystems**

(71) Anmelder: Siemens Aktiengesellschaft, 80333 München (DE)
(72) Erfinder: Kotzian, Daniel, 91052 Erlangen (DE)

(57) **Zusammenfassung**

Die Erfindung betrifft ein Verfahren zum Bestimmen von Reibungskomponenten einer gesamten Reibungskraft eines Antriebssystems. Weiterhin betrifft die Erfindung eine Steuerung und eine Maschine mit zumindest einem Antriebssystem. Schließlich betrifft die Erfindung ein Computerprogramm und ein Computerprogrammprodukt.

Um die im Stand der Technik bekannten Verfahren zum Bestimmen von Reibungskomponenten eines Antriebssystems zu verbessern, wird die Durchführung folgender Verfahrensschritte vorgeschlagen:
- Erzeugen einer periodischen Bewegung einer Gesamtmasse mit einer Frequenz mittels des Antriebssystems,
- Erfassen einer vom Antriebssystem zur Bewerkstelligung der periodischen Bewegung der Gesamtmasse aufgebrachten Antriebskraft,
- Erfassen von Positionsistwerten der bewegten Gesamtmasse,
- Ermitteln der gesamten Reibungskraft und einer Geschwindigkeit der bewegten Gesamtmasse zur Ermittlung einer Reibungs-Geschwindigkeits-Funktion mittels eines Reibungs-Geschwindigkeits-Beobachters derart, dass
- der Reibungs-Geschwindigkeits-Beobachter zumindest ein Streckenmodell und Oszillatoren umfasst,
- an die Oszillatoren jeweils zumindest die Frequenz als Eingabewert zugeführt wird,
- durch die Oszillatoren Ausgabewerte ausgegeben werden,
- wobei die Ausgabewerte ein zeitlicher Verlauf einer Beschleunigung der bewegten Gesamtmasse sind und die gesamte Reibungskraft mittels einer Umrechnung unter Verwendung der Gesamtmasse, einer von der Gesamtmasse abhängenden Gesamtmassenkraft und der Antriebskraft berechnet wird,
oder
wobei die Ausgabewerte ein zeitlicher Verlauf der gesamten Reibungskraft sind,
- die Geschwindigkeit mittels des Streckenmodells ermittelt wird,

- Bestimmen der Reibungskomponenten anhand der ermittelten Reibungs-Geschwindigkeits-Funktion.

## Beschreibung

Die Erfindung betrifft ein Verfahren zum Bestimmen von Reibungskomponenten einer gesamten Reibungskraft eines Antriebssystems.

Weiterhin betrifft die Erfindung eine Steuerung und eine Maschine mit zumindest einem Antriebssystem. Schließlich betrifft die Erfindung ein Computerprogramm und ein Computerprogrammprodukt.

Das Verfahren kann insbesondere dort zum Einsatz kommen, wo Antriebssysteme mit mehreren unterschiedlichen Reibungskomponenten behaftet sind, die bestimmt werden sollen. Reibungskomponenten umfassen beispielsweise Haftreibung und Gleitreibung, die beide geschwindigkeitsunabhängig sind, sowie eine viskose Reibung, die geschwindigkeitsabhängig ist. Bei dem Antriebssystem kann es sich um ein hydraulisches, pneumatisches, elektrisches oder ganz allgemein reibungsbehaftetes Antriebssystem handeln.

Ein derartiges Verfahren ist beispielsweise aus der Veröffentlichung von W.S. Owen, E.A. Croft: The reduction of stick-slip friction in hydraulic actuators, IEEE/ASME Transactions on Mechatronics, Vol. 8, No. 3, Seiten 362 - 371 für hydraulische Antriebssysteme bekannt. Weiterhin wird in diesem Dokument eine typische Reibungs-Geschwindigkeits-Funktion, die so genannte Stribeck-Kurve, gezeigt.

Aus der Veröffentlichung von De-hu Yuan, Hui-liang Jin, Guoxiang Meng, Chun-yuan Liu: Global Sliding Mode Variable Structure Control Applied to Pneumatic Servo System, Knowledge Acquisition and Modeling Workshop, 2008, KAM Workshop 2008, Seiten 806 - 809 ist ein derartiges Verfahren für pneumatische Antriebssysteme bekannt.

Aus der Veröffentlichung von Amin, J., Friedland, B., Harnoy, A.: Implementation of a friction estimation and compensation technique, Control Systems, IEEE, Volume 17, Issue 4, Seiten 71 - 76 ist ein derartiges Verfahren für elektrische Antriebssysteme bekannt.

Aus der Veröffentlichung von Lischinsky, P., Canudas-de-Wit, C., Morel, G.: Friction compensation for an industrial hydraulic robot, Control Systems, IEEE, Volume 19, Issue 1, Seiten 25 - 32 ist eine Messung der geschwindigkeitsabhängigen Reibung durch das Bewegen eines Antriebssystems mit konstanter Geschwindigkeit bekannt. Wiederholt man die Messung bei unterschiedlichen konstanten Geschwindigkeiten, lassen sich die Ergebnisse in einer Reibungs-Geschwindigkeits-Abbildung darstellen, aus welcher sich die einzelnen Reibungskompontenten ermitteln lassen.

Aus der Veröffentlichung von Tafazoli, S., de Silva, C.W., Lawrence, P.D.: Friction estimation in a planar electrohydraulic manipulator, Proceedings of the American Control Conference, 1995, Seiten 3294 - 3298 ist bekannt, die geschwindigkeitsabhängige Reibung zu bestimmen, indem ein Antriebssystem mit Hilfe eines Positionsreglers sinusförmig verfahren wird und die Reibung und die Geschwindigkeit mit Hilfe eines Coulombschen Geschwindigkeits-Beobachters geschätzt wird.

Aus der Veröffentlichung von Borsotto, B., Godoy, E., Beauvois, D., Devaud, E.: An identification method for static and dynamic friction coefficients, International Conference on Control, Automation and Systems, 2007, ICCAS 2007, Seiten 933 - 938 ist bekannt, die Gleitreibung und Haftreibung bei einem Antriebssystem durch das Erzwingen einer Oszillation der Position mittels eines PI-Reglers bei Kenntnis der Reglerverstärkung und der Oszillationsperiode zu identifizieren.

Generell kann ein Regelkreis eines dynamischen Systems einen Regler, eine negative Rückkopplung, einen Sollwert-IstwertVergleich sowie eine Regelstrecke umfassen. Mathematisch wird die Regelstrecke als Übertragungssystem definiert. Sie kann aus einem oder aus mehreren Übertragungssystemen und aus Eingrößen- und Mehrgrößensystemen bestehen, wobei die Übertragungssysteme lineares und nichtlineares Verhalten aufweisen können. Dementsprechend sind die mathematischen Beschreibungen der Regelstrecke unterschiedlich.

Um den Regler wie in der vorliegenden Erfindung für anspruchsvolle Regelaufgaben auslegen zu können, ist es nötig, die Regelstrecke anhand der Erstellung eines mathematischen Modells der Regelstrecke zu identifizieren. Deren zeitliches Verhalten erlaubt die Identifizierung eines Streckenmodells.

Aus der Patentschrift EP 0 170 016 B1 ist ein Verfahren zur Ermittlung und Kompensation des Einflusses von Walzenexzentrizitäten bei der Positions- oder Dickenregelung von Walzgerüsten bekannt. Exzentrizitätsstörungen werden als periodisches Signal mit Hilfe von Oszillatorenpaaren und eines Streckenmodells geschätzt. Unter einem Oszillator wird dabei eine Oszillatorschaltung verstanden, also ein schwingungsfähiges System, dass ein periodisches Signal mit vorgegebener Frequenz erzeugt.

Der Erfindung liegt die Aufgabe zugrunde, die im Stand der Technik bekannten Verfahren zum Bestimmen von Reibungskomponenten eines Antriebssystems zu verbessern.

Diese Aufgabe wird gelöst durch ein Verfahren mit folgenden Verfahrensschritten:
- Erzeugen einer periodischen Bewegung einer Gesamtmasse mit einer Frequenz mittels des Antriebssystems,
- Erfassen einer vom Antriebssystem zur Bewerkstelligung der periodischen Bewegung der Gesamtmasse aufgebrachten Antriebskraft,
- Erfassen von Positionsistwerten der bewegten Gesamtmasse,
- Ermitteln der gesamten Reibungskraft und einer Geschwindigkeit der bewegten Gesamtmasse zur Ermittlung einer Reibungs-Geschwindigkeits-Funktion mittels eines Reibungs-Geschwindigkeits-Beobachters derart, dass
   - der Reibungs-Geschwindigkeits-Beobachter zumindest ein Streckenmodell und Oszillatoren umfasst,
   - an die Oszillatoren jeweils zumindest die Frequenz als Eingabewert zugeführt wird,
   - durch die Oszillatoren Ausgabewerte ausgegeben werden,
   - wobei die Ausgabewerte ein zeitlicher Verlauf einer Beschleunigung der bewegten Gesamtmasse sind und die gesamte Reibungskraft mittels einer Umrechnung unter Verwendung der Gesamtmasse, einer von der Gesamtmasse abhängenden Gesamtmassenkraft und der Antriebskraft berechnet wird,
      oder
      wobei die Ausgabewerte ein zeitlicher Verlauf der gesamten Reibungskraft sind,
   - die Geschwindigkeit mittels des Streckenmodells ermittelt wird,
- Bestimmen der Reibungskomponenten anhand der ermittelten Reibungs-Geschwindigkeits-Funktion.

Diese Aufgabe wird weiter gelöst durch eine Steuerung gemäß Anspruch 6, eine Maschine gemäß Anspruch 7, ein Computerprogramm gemäß Anspruch 8 und ein Computerprogrammprodukt gemäß Anspruch 9.

Erfindungsgemäß wird die Gesamtmasse in eine periodische Bewegung versetzt, wobei die dafür benötigte Antriebskraft durch das Antriebssystem zur Verfügung gestellt wird. Die Gesamtmasse kann beispielsweise zusammengesetzt sein aus der Masse einer bewegten Last sowie der Masse von bewegten Teilen des Antriebssystems selbst. Die periodische Bewegung kann insbesondere sinusförmig sein, was den Vorteil bietet, dass die Geschwindigkeit kontinuierlich zwischen einer maximalen positiven und einer maximalen negativen Geschwindigkeit variiert wird und damit ein Geschwindigkeitsintervall vollständig abgedeckt werden kann. Folglich ist auch die Reibung eine periodische Größe, welche man kontinuierlich in Abhängigkeit der Geschwindigkeit erhält, was die Ermittlung der Reibungs-Geschwindigkeits-Funktion und somit der Analyse der einzelnen Reibungskomponenten vereinfacht. Dies erlaubt insbesondere die Ermittlung der Haftreibung anhand der Reibungs-Geschwindigkeits-Abbildung im Bereich der Geschwindigkeit Null, wobei das Maximum des Reibkraft-Betrags ausgewertet wird.

Die Reibungs-Geschwindigkeits-Funktion wird dabei anhand des Reibungs-Geschwindigkeits-Beobachters ermittelt, welcher zumindest ein Streckenmodell und Oszillatoren umfasst. Die erzwungene periodische Bewegung der Gesamtmasse erlaubt dabei eine besonders zuverlässige Ermittlung der Reibungs-Geschwindigkeits-Funktion.

Der Begriff des Beobachters wird, wie auch im genannten Stand der Technik, als System verwendet, das aus bekannten Eingangsgrößen, zum Beispiel Stellgrößen oder messbaren Störgrößen und Messgrößen eines beobachteten Referenzsystems, unter Verwendung eines Modells des Referenzsystems, nicht messbare Größen rekonstruiert. In der vorliegenden Erfindung wird der Beobachter als Ersatz einer direkten Reibungs- und Geschwindigkeitsmessung eingesetzt. Das System wird insgesamt in einem Modell nachgebildet, wobei die Oszillatoren und das Streckenmodell zum Einsatz kommen. Alle Zustände des Modells werden über die Messgröße abhängig von der Fehlerdynamik nachgeführt, wobei die Fehlerdynamik die Art und Weise der Zustandsnachführung festlegt. Bei der Nachführung der Zustände wird aus der Messgröße und dem dazugehörigen geschätzten Modellzustand eine Abweichung gebildet und mit dem Rückführvektor des Beobachters multipliziert. Das Ergebnis wird zur Nachführung aller Zustände verwendet. Ein Zustand ist hier ein Ausgang eines Integrators. Der Rückführvektor ergibt sich über die Vorgabe der Fehlerdynamik bei der Auslegung des Beobachters.

Unter einem Oszillator wird hierbei, wie im oben erwähnten Stand der Technik auch, ein schwingungsfähiges System verstanden, dass ein periodisches Signal mit vorgegebener Frequenz erzeugt. Dabei lässt sich ein Oszillator in der Regelungstechnik mit zwei hintereinander geschalteten Integratoren realisieren, wobei der Eingang des ersten Integrators mit dem Ausgang des zweiten Integrators und einer Multiplikation mit dem Faktor (2*Pi*f)² gegengekoppelt ist. Die Gegenkopplung entspricht in der Regelungstechnik einer Multiplikation mit -1. Der Parameter f stellt dabei die Frequenz des Oszillators dar und Pi ist die Kreiszahl.

Dabei kann der Reibungs-Geschwindigkeits-Beobachter, praktisch um eine Fourier-Analyse der periodischen Bewegung durchzuführen, mehrere Oszillatoren umfassen, wobei ein erster Oszillator eine Grundschwingung durchführt, deren Frequenz gleich der Frequenz der periodischen Bewegung ist. Weitere Oszillatoren können jeweils verschiedene Oberschwingungen mit Vielfachen der Frequenz der periodischen Bewegung durchführen. Prinzipiell gilt dabei, dass die Verwendung einer größeren Anzahl von Oszillatoren genauere Ergebnisse liefert, da damit der tatsächliche zeitliche Verlauf der Reibungskraft anhand der Überlagerung der Grund- und Oberschwingungen der Oszillatoren genauer angenähert werden kann.

Erfindungsgemäß wird den Oszillatoren zumindest die Frequenz der periodischen Bewegung als Eingabewert zugeführt. Daraus ermitteln die Oszillatoren Ausgabewerte.

Die Ausgabewerte der Oszillatoren können in Form eines zeitlichen Verlaufs der Beschleunigung der bewegten Gesamtmasse ausgegeben werden. Anhand der ausgegebenen Beschleunigung kann mittels des Streckenmodells, welches in diesem Fall eine zeitliche Integration umfasst, der zeitliche Verlauf der Geschwindigkeit beziehungsweise der Position der bewegten Gesamtmasse ermittelt werden. Dabei werden gemäß einem Beobachteransatz alle Zustände des Modells über einen Beobachtungsfehler, hier in Form einer Positionsabweichung, abhängig von der Fehlerdynamik, nachgeführt. Weiterhin wird aus der Beschleunigung anhand einer Umrechnung unter Berücksichtigung der beschleunigten Gesamtmasse, der Antriebskraft und der Gesamtmassenkraft die gesamte Reibungskraft berechnet. Somit sind, ausgehend vom zeitlichen Verlauf der Beschleunigung als Ausgabewert der Oszillatoren, sowohl die Geschwindigkeit als auch die gesamte Reibungskraft zugänglich, und die Reibungs-Geschwindigkeits-Funktion kann ermittelt werden.

Alternativ können die Oszillatoren die Ausgabewerte in Form eines zeitlichen Verlaufs der gesamten Reibungskraft ausgeben. Damit kann mittels eines Streckenmodells, welches die bewegte Gesamtmasse berücksichtigt und wiederum eine zeitliche Integration umfasst, der zeitliche Verlauf der Geschwindigkeit beziehungsweise der Position der bewegten Gesamtmasse ermittelt werden. Wiederum werden dabei gemäß einem Beobachteransatz alle Zustände des Modells über einen Beobachtungsfehler, hier in Form einer Positionsabweichung, abhängig von der Fehlerdynamik, nachgeführt. Ausgehend vom zeitlichen Verlauf der gesamten Reibungskraft als Ausgabewert der Oszillatoren kann somit die Geschwindigkeit bestimmt werden, so dass die Reibungs-Geschwindigkeits-Funktion ermittelt werden kann.

Anhand der ermittelten Reibungs-Geschwindigkeits-Funktion lassen sich dann mit herkömmlichen Methoden die unterschiedlichen im gegebenen Fall vorliegenden Reibungskomponenten, wie beispielsweise die geschwindigkeitsunabhängige Haftreibung, die geschwindigkeitsunabhängige Gleitreibung beziehungsweise die geschwindigkeitsabhängige viskose Reibung bestimmen. So ist die Haftreibung, welche nur bei Geschwindigkeit Null definiert ist, mittels der ermittelten Reibungs-Geschwindigkeits-Funktion durch den Reibungswert einer beginnenden, vom Stillstand ausgehenden Bewegung gegeben. Dagegen ist die Gleitreibung nur für Geschwindigkeiten größer Null definiert.

Insbesondere gegenüber dem aus dem Stand der Technik bekannten Coulombschen Geschwindigkeits-Beobachter ermöglicht das erfindungsgemäße Verfahren eine wesentlich genauere Bestimmung der Reibungs-Geschwindigkeits-Funktion. Dies liegt daran, dass der Coulombsche Geschwindigkeits-Beobachter die momentane Reibung schätzt und dieser zeitverzögert immer hinterherläuft. Dies benötigt immer wieder ein neues Einschwingen. Beim Coulombschen Geschwindigkeits-Beobachter wird die Periodizität der Bewegung nicht ausgenutzt, was bei der vorliegenden Erfindung allerdings getan wird. Damit ist es nämlich möglich, die Dauer des Einschwingens zu verkürzen, so dass beispielsweise mit Durchlaufen von nur zwei Perioden eine Ermittlung der Reibungskomponenten möglich ist. In der Praxis bedeutet dies, dass oft innerhalb von 30 Sekunden die Reibungskomponenten eines Antriebssystems bestimmt sind. Dazu müssen gegebenenfalls noch Massen und Trägheitsmomente bestimmt werden. Die kurze benötigte Zeit bietet viele Vorteile, so zum Beispiel, dass anhand des Verfahrens eine Zustandsüberwachung des Antriebssystems, insbesondere bei der Durchführung während Wartungsarbeiten, möglich ist. Sollte sich die gesamte Reibung oder einzelne Komponenten in bestimmter oder unerwarteter Art ändern, so können daraus Rückschlüsse auf eventuellen Verschleiß oder andere Zustandsdaten gezogen werden.

Ein weiterer Vorteil ist, dass das erfindungsgemäße Verfahren unabhängig von der Art des Reglers ist, welcher die gewünschte periodische Bewegung erzwingt. Zusätzlich ist es nicht notwendig, ein Reibmodell vorzugeben, da sich die Oszillatoren an die jeweils vorliegende Reibung anpassen. Dadurch, dass das Verfahren allgemein und auf das Wesentliche reduziert ist, ist das Verfahren zudem nicht streckenspezifisch, so dass es universell eingesetzt werden kann.

Selbstverständlich ist das erfindungsgemäße Verfahren nicht nur auf lineare Antriebssysteme anwendbar, sondern auch auf rotatorische Antriebssysteme. Anstatt der Antriebskraft beziehungsweise anstatt der Reibungskraft wird dazu ein Antriebsdrehmoment beziehungsweise ein Reibungsdrehmoment verwendet und anstatt der Gesamtmasse muss ein Gesamtmassenträgheitsmoment berücksichtigt werden. Weiterhin wird der Positionsistwert durch einen Winkelistwert ersetzt und entsprechend die Geschwindigkeit beziehungsweise die Beschleunigung durch eine Winkelgeschwindigkeit beziehungsweise eine Winkelbeschleunigung.

Bei einer vorteilhaften Ausgestaltung des Verfahrens ermitteln die Oszillatoren die Ausgangswerte mittels jeweils mindestens zwei Integratoren und jeweils einer Rückführung. Integratoren sind in der Regelungstechnik auch als I-Glied bekannt. Dabei werden die Frequenz der periodischen Bewegung und gegebenenfalls die Positionsistwerte mittels der Rückführung den Oszillatoren zugeführt. Bei einer Ausführung mit zwei Integratoren ist hierfür der Ausgang des zweiten Integrators mit dem Eingang des ersten Integrators verbunden, wobei zusätzlich Eingabewerte in Form einer Frequenz zugeführt werden.Die Verwendung von zwei Integratoren erlaubt hinreichend genaue Präzision. Dennoch ist das Verfahren anhand der relativ simplen Anordnung leicht zu realisieren.

In vorteilhafter Ausgestaltung der Erfindung sind die Ausgabewerte der Oszillatoren der zeitliche Verlauf der Beschleunigung der bewegten Gesamtmasse und umfasst der Reibungs-Geschwindigkeits-Beobachter zur Ermittlung der Reibungs-Geschwindigkeits-Funktion mindestens zwölf Oszillatoren mit jeweils unterschiedlichem, ungeradem Vielfachen der Frequenz. In der Praxis stellt sich heraus, dass schon zwölf Oszillatoren genügen, um die Reibungs-Geschwindigkeits-Funktion hinreichend genau zu ermitteln, wenn die Ausgabewerte der Oszillatoren ein zeitlicher Verlauf der Beschleunigung der bewegten Gesamtmasse sind. Beispielsweise kann ein erster Oszillator die Grundschwingung durchführen, deren Frequenz gleich der Frequenz der periodischen Bewegung ist. Die weiteren elf Oszillatoren können dann beispielsweise die ersten elf Oberschwingungen mit ungeradem Vielfachen der Frequenz durchführen, womit anhand der Überlagerung der Grund- und Oberschwingungen der Oszillatoren der tatsächliche zeitliche Verlauf der Reibungskraft hinreichend genau ermittelt werden kann.

Die Anzahl der Oszillatoren kann auch weiter erhöht werden, falls die Präzision weiter verbessert werden muss. Dabei können die Oszillatoren durchaus auch Oberschwingungen mit geradem Vielfachen der Frequenz durchführen. Besonders gute Ergebnisse lassen sich beispielsweise mit 18 Oszillatoren erzielen.

In einer alternativen vorteilhaften Ausgestaltung der Erfindung sind Ausgabewerte der Oszillatoren der zeitliche Verlauf der gesamten Reibungskraft und umfasst der Reibungs-Geschwindigkeits-Beobachter zur Ermittlung der Reibungs-Geschwindigkeits-Funktion mindestens zwölf Oszillatoren mit jeweils unterschiedlichem, ungeradem Vielfachen der Frequenz. Wie sich herausstellt werden zumindest zwölf Oszillatoren benötigt, um genügend gute Resultate für die Reibungs-Geschwindigkeits-Funktion zu erhalten, falls die Ausgabewerte der zeitliche Verlauf der gesamten Reibungskraft sind.

Bei einer vorteilhaften Ausgestaltung der Erfindung umfassen die Reibungskomponenten eine Gleitreibung und/oder eine viskose Reibung, wobei die Reibungs-Geschwindigkeits-Funktion für genügend große Geschwindigkeiten, bei denen keine Haftreibung auftritt, durch eine Geradengleichung charakterisiert wird und wobei die Geradengleichung mittels eines Optimierungsverfahrens ermittelt wird.

Wie durch die Stribeck-Kurve bekannt ist, tritt bei reibungsbehafteten Systemen ausgehend vom Stillstand zunächst Haftreibung und mit zunehmender Geschwindigkeit dann Grenzreibung und Mischreibung auf. Für genügend große Geschwindigkeiten kann die Reibungs-Geschwindigkeits-Funktion schließlich durch eine Geradengleichung beschrieben werden. Dabei charakterisiert die Steigung der Gerade die geschwindigkeitsabhängige viskose Reibung und der y-Achsenabschnitt der Gerade bestimmt die geschwindigkeitsunabhängige Gleitreibung. Da die einzelnen Punkte der Reibungs-Geschwindigkeits-Funktion mit Störsignalen verrauscht sein können, wird die Geradengleichung mittels Optimierungsverfahren ermittelt. Beispielsweise können Methoden wie die Methode der kleinsten Quadrate, die Maximum-Likelihood-Methode, weitere Fit- und Regressionsmethoden oder dergleichen hierzu eingesetzt werden.

Im Folgenden wird die Erfindung anhand der in den Figuren dargestellten Ausführungsbeispiele näher beschrieben und erläutert. Es zeigen:
- FIG 1: ein Flussdiagramm einer Ausführungsform des erfindungsgemäßen Verfahrens,
- FIG 2: ein Flussdiagramm einer weiteren Ausführungsform des erfindungsgemäßen Verfahrens
- FIG 3: ein Flussdiagramm eines Oszillators,
- FIG 4: ein Flussdiagramm eines Streckenmodells, einer Umrechnung und zweier Oszillatoren,
- FIG 5: ein Flussdiagramm eines weiteren Streckenmodells und zweier Oszillatoren,
- FIG 6: zeigt eine beispielhafte Reibungskraft in Abhängigkeit einer Geschwindigkeit,
- FIG 7: einen beispielhaften zeitlichen Verlauf der gesamten Reibungskraft und
- FIG 8: ein Blockschaltbild einer Ausführungsform der Maschine gemäß der vorliegenden Erfindung.

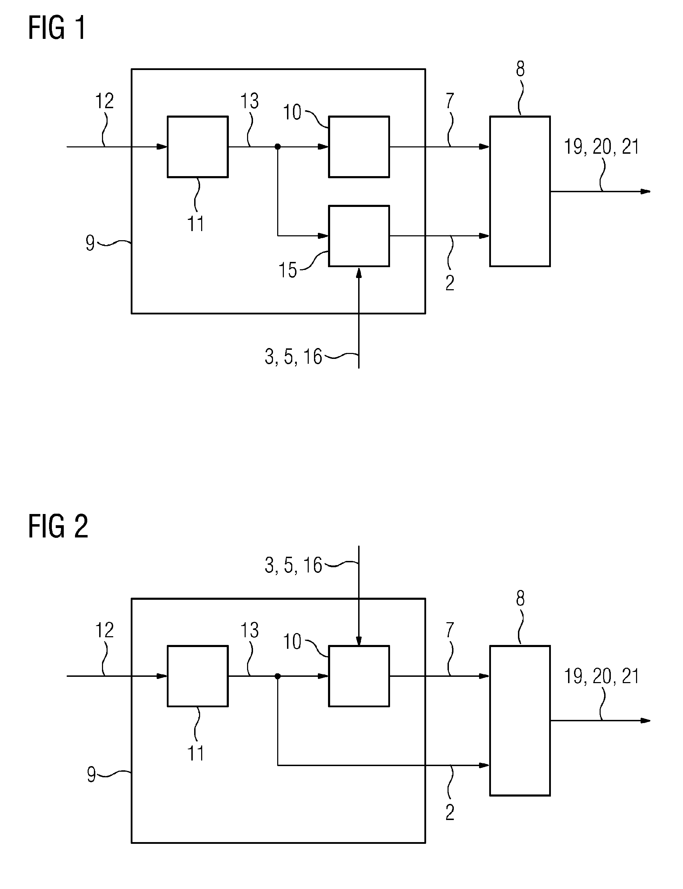

Figur 1 zeigt ein Flussdiagramm einer Ausführungsform des erfindungsgemäßen Verfahrens. Ein Reibungs-Geschwindigkeits-Beobachter 9 umfasst Oszillatoren 11, wobei der Einfachheit halber nur ein Oszillator in der Figur 1 illustriert ist. Für brauchbare Ergebnisse werden für das Verfahren mehrere Oszillatoren 11 benötigt. Den Oszillatoren 11 wird ein Eingabewert 12 zugeführt und sie geben Ausgabewerte 13 aus. Als Eingabewert 12 wird eine Frequenz verwendet und eine Beschleunigung 14 steht als Ausgabewert 13 zur Verfügung. Der Ausgabewert 13 wird sowohl einem Streckenmodell 10 zugeführt, welches eine Geschwindigkeit 7 ausgibt, als auch einer Umrechnung 15 zugeführt, welche unter Verwendung einer Gesamtmasse 3, einer von der Gesamtmasse 3 abhängenden Gesamtmassenkraft 16 und einer Antriebskraft 5 eine gesamte Reibungskraft 2 ausgibt. Die Geschwindigkeit 7 und die gesamte Reibungskraft 2 werden zu einer Reibungs-Geschwindigkeits-Funktion 8 kombiniert, aus der die Reibungskomponenten 19, 20, 21 bestimmt werden. Die Ergebnisse lassen sich nötigenfalls dadurch verbessern, dass die Anzahl der verwendeten Oszillatoren 11 erhöht wird. Für in dieser und den weiteren Figuren nicht dargestellte Bezugszeichen siehe die weiteren Figuren.

Figur 2 zeigt ein Flussdiagramm einer weiteren Ausführungsform des erfindungsgemäßen Verfahrens. Ein Reibungs-Geschwindigkeits-Beobachter 9 umfasst einen Oszillator 11, welchem ein Eingabewert 12 zugeführt wird und welcher Ausgabewerte 13 ausgibt. Als Eingabewert 12 wird eine Frequenz verwendet und eine gesamte Reibungskraft 2 steht als Ausgabewert 13 zur Verfügung. Der Ausgabewert 13 wird einem Streckenmodell 10 zugeführt, welches unter Berücksichtigung einer Gesamtmasse 3, einer Antriebskraft 5 und einer Gesamtmassenkraft 16 schließlich eine Geschwindigkeit 7 ausgibt. Die Geschwindigkeit 7 und die gesamte Reibungskraft 2 werden zu einer Reibungs-Geschwindigkeits-Funktion 8 kombiniert, aus der die Reibungskomponenten 19, 20, 21 bestimmt werden. Die Ergebnisse lassen sich nötigenfalls dadurch verbessern, dass die Anzahl der verwendeten Oszillatoren 11 erhöht wird.

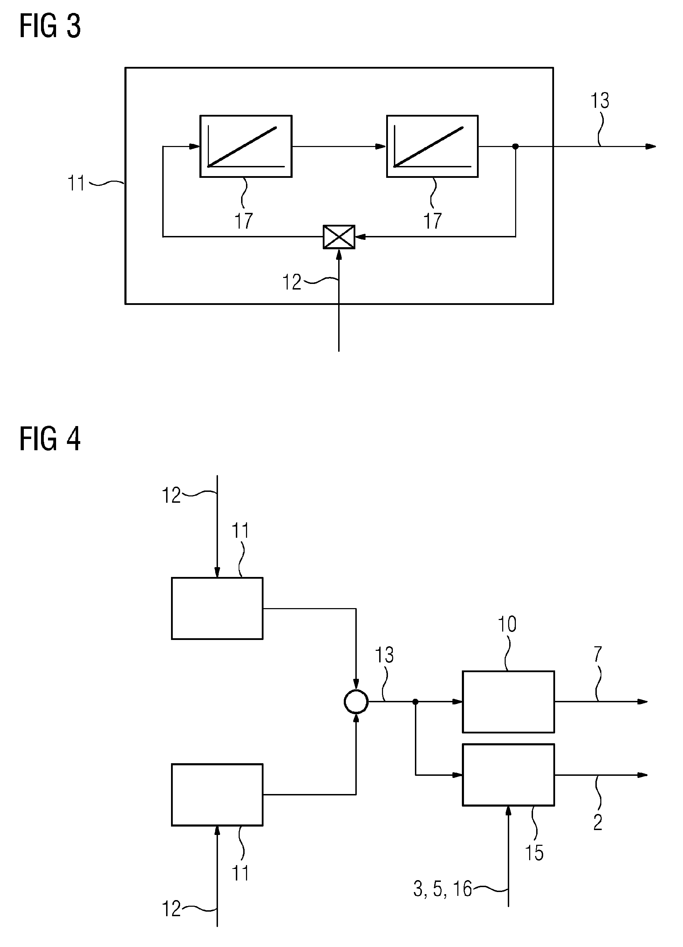

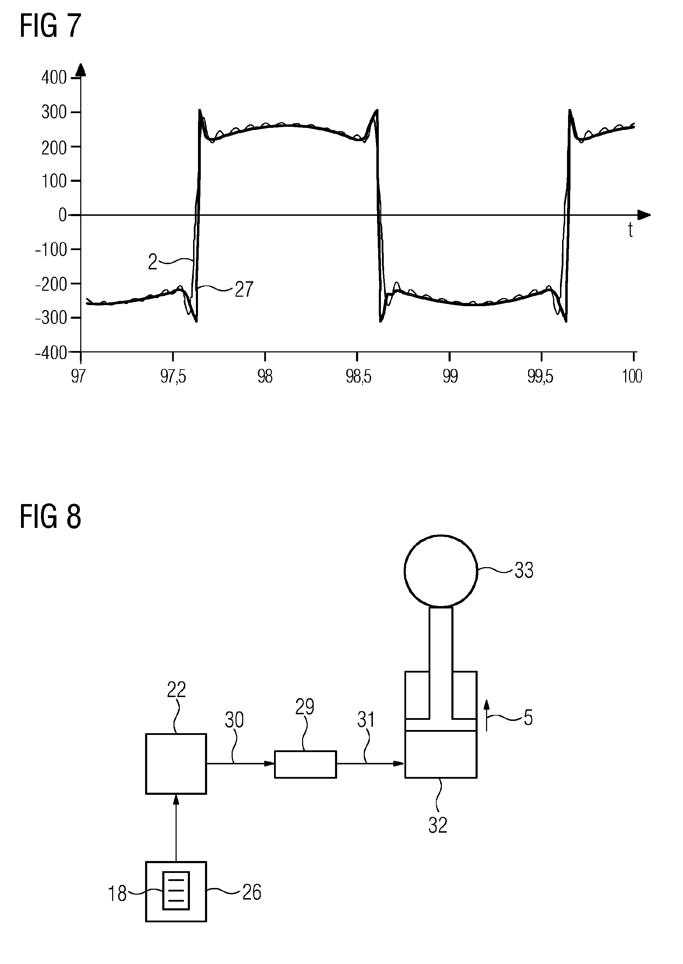

Figur 3 zeigt ein Flussdiagramm eines Oszillators 11, welcher zwei Integratoren 17 umfasst. Dem Oszillator 11 wird ein Eingabewert 12 zugeführt und er gibt Ausgabewerte 13 aus. Bei dem Oszillator 11 handelt es sich um eine Oszillatorschaltung, welche ein periodisches Signal mit der vorgegebenen Frequenz erzeugt. Dabei ist der Ausgang des zweiten Integrators 17 mit dem Eingang des ersten Integrators 17 verbunden, welche eine Rückführung darstellt, wobei zusätzlich der Eingabewert 12 zugeführt wird. Damit eine periodische Bewegung einer bewegten Gesamtmasse 3 untersucht werden kann, muss zumindest eine Frequenz als Eingabewert 12 den Oszillatoren 11 zugeführt werden, wobei konkret der Faktor (-2*Pi*f)² zugeführt wird und f die Frequenz und Pi die Kreiszahl ist. Der Oszillator 11 führt eine Grundschwingung der periodischen Bewegung aus, falls ihm die Grundfrequenz der periodischen Bewegung zugeführt wird und er führt eine n-te Oberschwingung der periodischen Bewegung aus, falls im das (n+1)-fache der Grundfrequenz zugeführt wird. Die periodische Bewegung lässt sich daher anhand mehrerer Oszillatoren 11 mit jeweils unterschiedlichem Vielfachen der Frequenz durch Ausführung einer Fourier-Analyse nachbilden, wobei die Präzision mit zunehmender Anzahl von Oszillatoren 11 zunimmt. Hierzu sei auf Figur 7 verwiesen, in welcher ein zeitlicher Verlauf der gesamten Reibungskraft für ein sinusförmig bewegtes Systems dargestellt wird.

Figur 4 zeigt ein Flussdiagramm eines Streckenmodells 10, einer Umrechnung 15 und zweier vorgeschalteter Oszillatoren 11, welchen jeweils ein Eingabewert 12 zugeführt wird. Als Eingabewert 12 wird eine Frequenz verwendet und eine Beschleunigung 14 steht als Ausgabewert 13 zur Verfügung. Beispielsweise führt einer der beiden Oszillatoren 11 eine Grundschwingung mit einer Frequenz aus, welche der Frequenz der periodischen Bewegung einer Gesamtmasse 3 entspricht, wobei der andere Oszillator 11 eine Oberschwingung bezüglich der periodischen Bewegung ausführen kann. Die Anzahl der Oszillatoren kann erhöht werden, beispielsweise um die Präzision des Verfahrens zu erhöhen.

Die Ausgabewerte 13 der beiden Oszillatoren 11 werden innerhalb des Streckenmodells 10 in eine Geschwindigkeit 7 der bewegten Gesamtmasse 3 umgerechnet. Gleichzeitig wird in einer Umrechnung 15, ausgehend von den Ausgabewerten 13 unter Berücksichtigung der Gesamtmasse 3, einer Antriebskraft 5 und einer Gesamtmassenkraft 16, eine gesamte Reibungskraft 2 ermittelt. Somit stehen schließlich sowohl die gesamte Reibungskraft 2 als auch die Geschwindigkeit 7 der bewegten Gesamtmasse zur Verfügung.

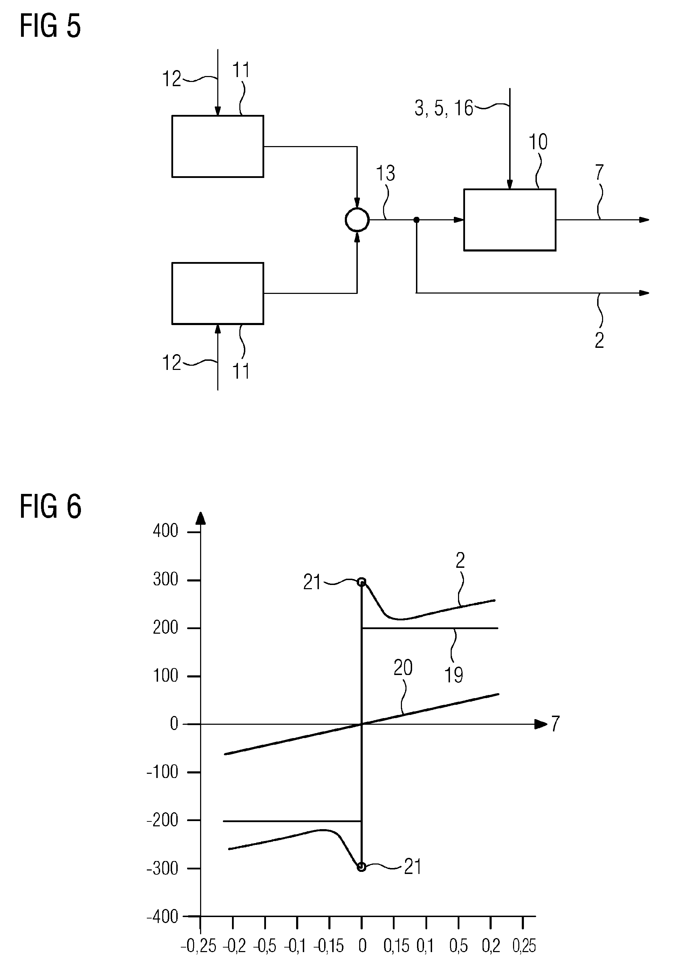

Figur 5 zeigt ein Flussdiagramm eines weiteren Streckenmodells 10 und zweier vorgeschalteter Oszillatoren 11, welchen jeweils ein Eingabewert 12 zugeführt wird. Als Eingabewert 12 wird eine Frequenz verwendet und die Ausgabewerte 13 stehen hier in Form einer gesamten Reibungskraft 2 zur Verfügung.

Die Ausgabewerte 13 der beiden Oszillatoren 11 werden unter Berücksichtigung einer Antriebskraft 5, einer Gesamtmassenkraft 16 sowie der Gesamtmasse 3 innerhalb des Streckenmodells 10 in eine Geschwindigkeit 7 der bewegten Gesamtmasse 3 umgerechnet. Somit stehen schließlich sowohl die gesamte Reibungskraft 2 als auch die Geschwindigkeit 7 der bewegten Gesamtmasse zur Verfügung.

Figur 6 zeigt eine beispielhafte Reibungskraft 2 in Abhängigkeit einer Geschwindigkeit 7, wobei auf der y-Achse Kräfte und auf der x-Achse die Geschwindigkeit 7 jeweils in willkürlichen Einheiten aufgetragen sind. Die Reibungskraft 2 in Abhängigkeit der Geschwindigkeit 7 bildet eine Reibungs-Geschwindigkeits-Funktion 8, bekannt als Stribeck-Kurve. Diese beispielhafte Kurve kann bei einer reibungsbehafteten Bewegung einer bewegten Gesamtmasse 3 beobachtet werden, wobei die gesamte Reibungskraft 2 sich aus verschiedenen Reibungskomponenten zusammensetzt. Für betragsmäßig sehr kleine Geschwindigkeiten 7, bei denen sich die bewegte Gesamtmasse 3 im Wesentlichen nicht bewegt, wird die Reibung durch eine vergleichsweise große Haftreibung 21 bestimmt. Sobald sich die bewegte Gesamtmasse 3 bewegt und der Bereich mit Grenzreibung und Mischreibung verlassen wurde, tritt nur noch eine geschwindigkeitsabhängige viskose Reibung 20 und eine geschwindigkeitsunabhängige Gleitreibung 19 auf.

Figur 7 zeigt einen beispielhaften zeitlichen Verlauf der gesamten Reibungskraft 2. Vor der Umkehrung des Vorzeichens der gesamten Reibungskraft 2 bewegt sich eine Gesamtmasse 3 in die eine Richtung, wird abgebremst und immer langsamer bis die Gesamtmasse ruht. Nach der Umkehrung des Vorzeichens der gesamten Reibungskraft 2 bewegt sich die Gesamtmasse 3 in die entgegengesetzte Richtung. Bei der Umkehr der Bewegungsrichtung lässt sich eine besonders große gesamte Reibungskraft 2 beobachten, welche auf die Haftreibung 21 zurückgeht. Sobald sich die Gesamtmasse 3 bewegt und den Stribeck-Bereich verlassen hat, wird die gesamte Reibungskraft 2 durch eine geschwindigkeitsabhängige viskose Reibung 20 und eine geschwindigkeitsunabhängige Gleitreibung 19 charakterisiert.

Das erfindungsgemäße Verfahren hat zum Ziel, diese Reibungskomponenten 19, 20, 21 der gesamten Reibungskraft 2 zu ermitteln, wozu zunächst die gesamte Reibungskraft 2 möglichst genau erfasst werden muss. Eine mit dem erfindungsgemäßen Verfahren berechnete gesamte Reibungskraft 2 bildet die tatsächliche gesamte Reibungskraft 27, welche zum Vergleich eingetragen ist, relativ genau ab. Im Bereich der Spitzen der tatsächlichen gesamten Reibungskraft 27 weist die berechnete gesamte Reibungskraft 2 die größten Abweichungen auf. Dieser Bereich stellt eine Herauforderung dar, welcher mit einer genügenden Anzahl von Oszillatoren 11 begegnet werden kann. So wurde die berechnete gesamte Reibungskraft 2 anhand eines Reibungs-Geschwindigkeits-Beobachters 9 mit zwölf Oszillatoren 11 ermittelt, wobei einer der Oszillatoren 11 eine Grundschwingung der periodischen Bewegung und die weiteren Oszillatoren 11 jeweils unterschiedliche Oberschwingungen mit ungeradem Vielfachen der Frequenz der periodischen Bewegung ausgeführt haben. Mit zunehmender Zahl der berücksichtigten Oberschwingungen können dabei die Spitzen der gesamten Reibungskraft 2 präziser nachgebildet werden.

Figur 8 zeigt ein Blockschaltbild einer Ausführungsform der Maschine gemäß der vorliegenden Erfindung. Eine Last 33 wird dabei mittels eines Zylinders 32 eines Hydrauliksystems bewegt, wobei sich eine bewegte Gesamtmasse 3 aus der Masse der Last 33 und gegebenenfalls aus der Masse von bewegten Teilen der Maschine zusammensetzt. Eine Steuerung 22 steuert die Bewegung und bestimmt Reibungskomponenten des Antriebssystems durch Ablauf eines Computerprogramms 18, welches auf einem Computerprogrammprodukt 26 gespeichert ist. Die Steuerung 22 gibt eine Stellgröße 30 an einen Steuerkolben 29 aus, welcher einen Volumenstrom 31 von Hydrauliköl in den Zylinder 32 bewirkt, der schließlich eine Antriebskraft 5 zur Bewegung der Last 33 erzeugt.

Zusammenfassend betrifft die Erfindung ein Verfahren zum Bestimmen von Reibungskomponenten einer gesamten Reibungskraft eines Antriebssystems. Weiterhin betrifft die Erfindung eine Steuerung und eine Maschine mit zumindest einem Antriebssystem. Schließlich betrifft die Erfindung ein Computerprogramm und ein Computerprogrammprodukt.

Um die im Stand der Technik bekannten Verfahren zum Bestimmen von Reibungskomponenten eines Antriebssystems zu verbessern, wird die Durchführung folgender Verfahrensschritte vorgeschlagen:
- Erzeugen einer periodischen Bewegung einer Gesamtmasse mit einer Frequenz mittels des Antriebssystems,
- Erfassen einer vom Antriebssystem zur Bewerkstelligung der periodischen Bewegung der Gesamtmasse aufgebrachten Antriebskraft,
- Erfassen von Positionsistwerten der bewegten Gesamtmasse,
- Ermitteln der gesamten Reibungskraft und einer Geschwindigkeit der bewegten Gesamtmasse zur Ermittlung einer Reibungs-Geschwindigkeits-Funktion mittels eines Reibungs-Geschwindigkeits-Beobachters derart, dass
   - der Reibungs-Geschwindigkeits-Beobachter zumindest ein Streckenmodell und Oszillatoren umfasst,
   - an die Oszillatoren jeweils zumindest die Frequenz als Eingabewert zugeführt wird,
   - durch die Oszillatoren Ausgabewerte ausgegeben werden,
   - wobei die Ausgabewerte ein zeitlicher Verlauf einer Beschleunigung der bewegten Gesamtmasse sind und die gesamte Reibungskraft mittels einer Umrechnung unter Verwendung der Gesamtmasse, einer von der Gesamtmasse abhängenden Gesamtmassenkraft und der Antriebskraft berechnet wird,
      oder
      wobei die Ausgabewerte ein zeitlicher Verlauf der gesamten Reibungskraft sind,
   - die Geschwindigkeit mittels des Streckenmodells ermittelt wird,
- Bestimmen der Reibungskomponenten anhand der ermittelten Reibungs-Geschwindigkeits-Funktion.

## Patentansprüche

1. Verfahren zum Bestimmen von Reibungskomponenten einer gesamten Reibungskraft (2) eines Antriebssystems mit folgenden Verfahrensschritten:
- Erzeugen einer periodischen Bewegung einer Gesamtmasse (3) mit einer Frequenz mittels des Antriebssystems,
- Erfassen einer vom Antriebssystem zur Bewerkstelligung der periodischen Bewegung der Gesamtmasse (3) aufgebrachten Antriebskraft (5),
- Erfassen von Positionsistwerten (6) der bewegten Gesamtmasse (3),
- Ermitteln der gesamten Reibungskraft (2) und einer Geschwindigkeit (7) der bewegten Gesamtmasse (3) zur Ermittlung einer Reibungs-Geschwindigkeits-Funktion (8) mittels eines Reibungs-Geschwindigkeits-Beobachters (9) derart, dass
- der Reibungs-Geschwindigkeits-Beobachter (9) zumindest ein Streckenmodell (10) und Oszillatoren (11) umfasst,
- an die Oszillatoren (11) jeweils zumindest die Frequenz als Eingabewert (12) zugeführt wird,
- durch die Oszillatoren (11) Ausgabewerte (13) ausgegeben werden,
- wobei die Ausgabewerte (13) ein zeitlicher Verlauf einer Beschleunigung (14) der bewegten Gesamtmasse (3) sind und die gesamte Reibungskraft (2) mittels einer Umrechnung (15) unter Verwendung der Gesamtmasse (3), einer von der Gesamtmasse (3) abhängenden Gesamtmassenkraft (16) und der Antriebskraft (5) berechnet wird,
oder
wobei die Ausgabewerte (13) ein zeitlicher Verlauf der gesamten Reibungskraft (2) sind,
- die Geschwindigkeit (7) mittels des Streckenmodells (10) ermittelt wird,
- Bestimmen der Reibungskomponenten anhand der ermittelten Reibungs-Geschwindigkeits-Funktion (8).

2. Verfahren nach Anspruch 1,
wobei die Oszillatoren (11) die Ausgangswerte (13) mittels jeweils mindestens zwei Integratoren (17) und jeweils einer Rückführung ermitteln.

3. Verfahren nach einem der vorhergehenden Ansprüche,
- wobei die Ausgabewerte (13) der zeitliche Verlauf der Beschleunigung (14) der bewegten Gesamtmasse (3) sind und
- wobei der Reibungs-Geschwindigkeits-Beobachter (9) zur Ermittlung der Reibungs-Geschwindigkeits-Funktion (8) mindestens zwölf Oszillatoren (11) mit jeweils unterschiedlichem, ungeradem Vielfachen der Frequenz, umfasst.

4. Verfahren nach einem der Ansprüche 1 bis 3,
- die Ausgabewerte (13) der zeitliche Verlauf der gesamten Reibungskraft (2) sind und
- wobei der Reibungs-Geschwindigkeits-Beobachter (9) zur Ermittlung der Reibungs-Geschwindigkeits-Funktion (8) mindestens zwölf Oszillatoren (11) mit jeweils unterschiedlichem, ungeradem Vielfachen der Frequenz, umfasst.

5. Verfahren nach einem der vorhergehenden Ansprüche,
- wobei die Reibungskomponenten eine Gleitreibung (19) und/oder eine viskose Reibung (20) umfassen und die Reibungs-Geschwindigkeits-Funktion (8) für genügend große Geschwindigkeiten (7), bei denen keine Haftreibung (21) auftritt, durch eine Geradengleichung charakterisiert werden kann,
- wobei die Geradengleichung mittels eines Optimierungsverfahrens ermittelt wird.

6. Steuerung (22) für eine Maschine mit zumindest einem Antriebssystem, welches eine Bewegung einer Gesamtmasse (3) ausführt,
wobei die Steuerung (22) Mittel zur Durchführung eines Verfahrens nach einem der Ansprüche 1 bis 5 aufweist.

7. Maschine mit
- zumindest einem Antriebssystem, welches eine bewegliche Gesamtmasse (3) antreibt
- einer Steuerung (22), welche nach Anspruch 6 ausgebildet ist.

8. Computerprogramm (18) zur Durchführung eines Verfahrens nach einem der Ansprüche 1 bis 5 bei Ablauf in einer Steuerung (22) nach Anspruch 6.

9. Computerprogrammprodukt (26), auf dem ein Computerprogramm (18) nach Anspruch 8 gespeichert ist.
